# EUROPÄISCHE PATENTSCHRIFT

(11) **EP 2 014 372 B1**
(45) Veröffentlichungstag und Bekanntmachung des Hinweises auf die Patenterteilung: **16.12.2009**
(21) Anmeldenummer: 07109899.0
(22) Anmeldetag: 08.06.2007
(51) Int. Cl.: B05B 7/14, G01G 13/02

(54) **Dosiervorrichtung für pulver- oder pastenförmige Substanzen**
Metering device for material in powder or paste form
Dispositif de dosage pour substances en forme de poudre ou de pâte

(43) Veröffentlichungstag der Anmeldung: 14.01.2009
(73) Patentinhaber: Mettler-Toledo AG, 8606 Greifensee (CH)
(72) Erfinder: Lüchinger, Paul, 8610 Uster (CH); Zehnder, Marc, 8604 Volketswil (CH); Ehrbar, Sandra, 8605 Gutenswil (CH)

(56) Entgegenhaltungen:
- WO-A-97/05962
- US-A- 2 526 735
- US-A- 2 817 561
- US-A- 5 145 009

## Beschreibung

Die vorliegende Erfindung bezieht sich auf eine Dosiervorrichtung, vorzugsweise für pulver- oder pastenförmiges Dosiergut.

Solche Dosiervorrichtungen werden insbesondere zum Eindosieren kleiner Mengen Dosiergut mit hoher Präzision in Zielgefässe verwendet. Häufig sind solche Zielgefässe auf einer Waage platziert, um die Menge der aus der Dosiervorrichtung ausgetragenen Substanz zu verwiegen, so dass sie anschliessend bestimmungsgemäss weiter verarbeitet werden kann. Die zu dosierende Substanz befindet sich beispielsweise in einer Dosiereinheit, welche einen Dosierkopf aufweist.

Dosiervorrichtungen für trockenes und/oder pulverförmiges Schüttgut, beispielsweise Farbstoffpulver sind bekannt und im Einsatz. So wird in der US 5 145 009 A , die die Merkmale des Oberbegriffs des Anspruchs 1 zeigt, eine Vorrichtung zum Dosieren beschrieben, deren Dosiereinheit einen verschliessbaren Auslass an der Unterseite aufweist. Als Verschlusselement dient ein kegelförmiger, sich nach oben verjüngender zum Öffnen einer Austrittöffnung vertikal nach unten verstellbarer Ventilkörper, der in seiner Offenstellung rotiert und Mittel zum Fördern des Gutes in Richtung der Auslassöffnung besitzt. Ferner wird die Dosiereinheit von einer Antriebswelle durchdrungen, welche an der Oberseite der Dosiereinheit über diese hinausragt und mit einem Antrieb gekoppelt ist. Die Dosiereinheit ist durch einen Befestigungsflansch an ihrer Unterseite mit einer Antriebseinheit der Dosiervorrichtung verbunden. Auf den Deckel der Dosiereinheit wirken mehrere Druckzylinder, über deren Hub die Auslassöffnung und damit die Fördermenge der Dosiereinheit beeinflusst werden kann.

Die Druckzylinder sind dabei an einem, oberhalb der Dosiereinheit mit Hilfe einer Spindel auf- und abwärts verstellbaren Träger angeordnet, der den Antrieb für den drehbaren Ventilkörper trägt. Die Spindel wird mit Hilfe eines weiteren Motors betätigt um über eine drehfeste Mutter, welche mit dem Träger verbunden ist, den Träger, die Druckzylinder und den Antrieb mit der Kupplung in vertikaler Richtung zu bewegen.

In der Betriebsposition sind die Verstellelemente der Druckzylinder in Kontakt oder nahezu in Kontakt mit dem Deckel der Dosiereinheit, so dass sie zum Abwärtsdrücken des Deckels und dadurch zum öffnen des Ventils zur Verfügung stehen.

Die Bewegung des Kupplungsvorganges und die Bewegung des Ventilkörpers werden somit durch zwei verschiedene Antriebssysteme bewerkstelligt. In dieser Antriebseinheit können Dosierbehälter verschiedener Höhe eingesetzt werden. Trotz der getrennten Antriebssysteme für den Kupplungsvorgang und für die Öffnungsbewegung des Ventilkörpers besteht immer die Gefahr, dass beim Kupplungsvorgang durch lineares Verschieben des Ventilkörpers unbeabsichtigt Dosiergut aus der Dosiereinheit austreten kann. Dies kann beispielsweise dann geschehen, wenn der Träger zu nahe an den Dosierbehälter zugestellt wird. Ferner kann ein unbeabsichtigtes Öffnen auch bei der Verwendung einer formschlüssigen Kupplung geschehen, wenn die beiden Kupplungshälften aufgrund radialen oder drehwinkelabhängigen Versatzes gegeneinander anstehen, statt ineinander zu greifen.

Ein vorzeitiges Austragen kann insbesondere bei toxischen Substanzen eine Gefahr für den Benutzer der Dosiervorrichtung darstellen. Aber auch bei unbedenklichen Substanzen kann ein unbeabsichtigtes Austragen unerwünscht sein. Dies ist insbesondere dann ärgerlich, wenn eine Pulvermischung aus mehreren Pulvern hergestellt werden soll, wobei die einzelnen Bestandteile der Mischung aus nacheinander in die Antriebseinheit eingesetzten Dosiereinheiten in dasselbe Zielgefäss ausgetragen werden.

Sofern keine sehr teure Steuerung und teure Schrittmotoren mit Positionsgebern verwendet werden, muss der Kopplungsvorgang manuell überwacht und durchgeführt werden. Dies erfordert sehr viel Aufmerksamkeit des Anwenders und im Vergleich zu einem automatisierten Kopplungsvorgang eine sehr lange Einrichtzeit.

Die in der US 5 145 009 A beschriebene Antriebseinheit weist mit dem spindelverstellbaren Träger und den Druckzylindern einen sehr komplizierten Aufbau auf und benötigt sehr teure Schrittmotoren mit Positionsgeber. Deren Positionierungssignale werden durch einen Mikrocomputer verarbeitet und die Schrittmotoren durch den Mikrocomputer entsprechend gesteuert. Die Anforderung an die Mechanik und die Elektronik ist sehr hoch, da die Motoren sofort stoppen müssen wenn die Kopplungsposition erreicht worden ist. Auch bei dieser Antriebseinheit muss zumindest die Höhe der eingesetzten Dosiereinheit und damit die Lage der Kupplung bekannt sein und diese Höhe manuell in der Steuerung eingegeben werden, Oder es muss zumindest die Lage der Kupplung, beispielsweise durch einen optischen Sensor, ermittelt werden, wenn ein vorzeitiges Öffnen der Austragungsöffnung verhindert werden soll. Die manuelle Eingabe kann aber fehlerhaft sein und zu den vorangehend beschriebenen Problemen führen. Ferner ist der Einsatz von Sensoren gerade bei Dosiervorrichtungen aufgrund der Verschmutzungsgefahr sehr problematisch, da Dosiergut an den Sensorelementen anhaften und infolge dessen die Sensitivität des Sensors beeinträchtigen kann.

Aufgabe der vorliegenden Erfindung ist es daher, eine im Aufbau einfache, kostengünstige Antriebseinheit einer Dosiervorrichtung zu schaffen, welche eine automatische Kopplung der Antriebseinheit mit einer Dosiereinheit bei grösstmöglicher Sicherheit ermöglicht.

Diese Aufgabe wird mit einer Dosiervorrichtung und mit einem Verfahren gelöst, welche die in den unabhängigen Patentansprüchen angegebenen Merkmale aufweisen.

Eine Dosiervorrichtung weist mindestens eine Aufnahmevorrichtung für eine Dosiereinheit und mindestens eine Antriebseinheit auf. Die Antriebseinheit beinhaltet eine Antriebsstange. Die Dosiereinheit ist in die Antriebseinheit einsetzbar beziehungsweise aus dieser entfernbar und weist mindestens eine Austragungsöffnung und mindestens ein in der Austragungsöffnung angeordnetes und im Betriebszustand der Dosiervorrichtung mit der Antriebsstange koppelbares Verschlusselement auf. Durch eine lineare Verschiebbarkeit des Verschlusselementes in der Austragungsöffnung entlang seiner Mittellängsachse und durch die Formgebung des Verschlusselements ist der Austrittsquerschnitt der Austragungsöffnung zwischen einer Geschlossenstellung und einer maximalen Offenstellung variierbar. Zur Kopplung der Antriebsstange mit dem Verschlusselement, beziehungsweise zur Öffnung der Austragungsöffnung, ist die Antriebseinheit in einer linearen Zustellbewegung zur Dosiereinheit hin verschiebbar ausgebildet. Das Verschlusselement der Dosiereinheit ist mittels einer Verschlussfeder bis zum Abschluss eines Kopplungsvorganges des Verschlusselements mit der Antriebsstange in der Geschlossenstellung gehalten. Zur Verhinderung eines vorzeitigen Öffnens der Austragungsöffnung beim Kopplungsvorgang, ist die Antriebsstange relativ zur Antriebseinheit gegen die Zustellbewegung begrenzt linear verschiebbar.

Die Begrenzung der Verschiebbarkeit der Antriebsstange gegen die Zustellbewegung ist deswegen notwendig, da die Öffnungsbewegung des Verschlusselements ebenfalls durch die lineare Verschiebung der Antriebseinheit erfolgt. Dies wird dadurch erreicht, dass an der Antriebseinheit ein Anschlag und an der Antriebsstange ein Gegenanschlag ausgebildet sind. Sobald der Gegenanschlag am Anschlag anliegt, wird die Antriebsstange weiter in Richtung Zustellbewegung bewegt und verschiebt das Verschlusselement in linearer Richtung, wodurch die Austragungsöffnung freigegeben wird.

Die Verschlussfederkraft, welche das Verschlusselement in Position hält, muss grösser sein als die zum Verschieben der Antriebsstange entgegen der Zustellbewegung notwendige Rückstellkraft. Diese Rückstellkraft entspricht beispielsweise der Gewichtskraft der Antriebsstange und der Reibung beim Verschieben oder, sofern die Antriebsstange gegen den Antriebsmotor federnd abgestützt ist, der Federkraft dieser Rückstellfeder.

Beim Kopplungsvorgang muss die Antriebseinheit daher nicht sorgfältig gegen die Dosiereinheit hin verschoben und ausgerichtet werden um die Antriebsstange mit dem Verschlusselement zu koppeln. Es werden sowohl Längenunterschiede infolge der Fertigungstoleranzen der einzelnen einsetzbaren Dosiereinheiten als auch unvermeidbare Verfahrensweg-Toleranzen der Zustellbewegung, beispielsweise infolge der Trägheit der Spindeln und des Antriebsmotors, ausgeglichen. Dadurch ist der Einsatz teurer Sensoren wie beispielsweise Positionsgeber und eine Signalverarbeitungseinheit zur Weiterbehandlung der Sensorsignale nicht notwendig.

Besonders pappiges und pastöses Dosiergut fliesst nicht ohne zusätzliche mechanische Unterstützung durch die Austragungsöffnung. Vorteilhaft für die Austragung von Dosiergut ist daher, wenn das Verschlusselement und die Antriebsstange drehantreibbar ausgebildet sind. Dadurch entsteht eine Relativbewegung zwischen dem Verschlusselement und dem die Austragungsöffnung aufweisenden Gehäuse der Dosiereinheit. Diese Relativbewegung unterstützt die Förderung des Dosiergutes durch die Austragungsöffnung.

Um die Austragung solchen Dosiergutes aus der Dosiereinheit zusätzlich zu unterstützen, weist die Dosiervorrichtung vorzugsweise ein Schlagwerk auf, dessen Schläge auf das Verschlusselement übertragbar sind. Die Schläge sind unabhängig von der momentanen Lage des Verschlusselements in Bezug zur Austragungsöffnung und unabhängig von einer Öffnungs- oder Schliessbewegung des Verschlusselementes.

Es hat sich als besonders vorteilhaft erwiesen, dass die Schläge des Schlagwerks über die Antriebsstange auf das Verschlusselement übertragen werden. Aufgrund der geringen Eigenmasse der Antriebsstange und des Verschlusselementes ist eine wesentlich kleinere Schlagenergie notwendig, als wenn die Schläge auf das Gehäuse der Dosiereinheit erfolgen. Dadurch können die mechanischen Komponenten des Schlagwerks und der Antriebseinheit verhältnismässig klein dimensioniert ausgestaltet und die mechanischen Komponenten der Dosiervorrichtung insgesamt geschont werden. Ferner werden Peripheriegeräte wie beispielsweise zur Steuerung und Regelung der Dosiervorrichtung eingesetzte Kraftmesszellen, welche die in ein Zielgefäss ausgetragene Masse erfassen, wesentlich weniger beeinflusst beziehungsweise in der Erfassung der Messwerte gestört. Auch die Anforderungen an die Dämpfung eines Unterbaus, auf welchen die Dosiervorrichtung gestellt wird, reduzieren sich dadurch erheblich.

Um Schläge zu erzeugen, weist das Schlagwerk vorzugsweise einen Spannmechanismus und einen Hebel auf. Sobald der Hebel durch den Spannmechanismus freigegeben wird, wird er durch eine Schlagfeder oder durch die Verschlussfeder beschleunigt. Dabei schlägt der Hebel je nach Beschleunigungsrichtung entweder an einer, an der Antriebsstange ausgebildeten Schlagfläche oder an einem Anschlag, beispielsweise einer Schlaghub-Einstellvorrichtung auf. Beim Aufschlag werden Schockwellen erzeugt, welche sich durch die Antriebsstange bis zum Verschlusselement fortpflanzen und dort eine sehr schnelle, aber bezogen auf die Öffnungsdistanz geringe axiale Verschiebung des Verschlusselementes bewirken. Diese Verschiebung erwirkt infolge hoher Scherkräfte zumindest eine kurzzeitige Ablösung des Dosiergutes von der Oberfläche des Verschlusselements. Da die Anhaftungsfläche dadurch im Austragungsquerschnitt verringert wird, kann unter Einfluss der Schwerkraft und mehrerer nacheinander folgender Schläge das Dosiergut ausgetragen werden.

Der Hebel kann zusätzlich eine Hammermasse aufweisen, um eine grössere Schlagenergie zu erreichen.

Vorzugsweise ist mindestens eine der Einstellung des Schlagspiels zwischen dem Hebel und der Schlagfläche dienende Spiel- Einstellvorrichtung, insbesondere eine Spieljustierschraube am Hebel angeordnet. Durch die Einstellung des Schlagspiels kann die Schlagenergie eingestellt werden, da mit zunehmendem Spiel die Beschleunigungsstrecke des Hebels variiert werden kann.

Ferner kann das Schlagwerk auch eine Schlaghub-Einstellvorrichtung, insbesondere einen einstellbaren Endanschlag für den Hebel aufweisen. Dieser Endanschlag dient dazu, die Schlagamplitude zu begrenzen. Einerseits wird dadurch die Schlagenergie beeinflusst, andererseits kann der Öffnungsfehler des Durchlassquerschnitts begrenzt werden. Der Öffnungsfehler entsteht dadurch, dass infolge der durch die Schläge verursachten, kurzzeitigen Veränderung der axialen Stellung des Verschlusselementes zum Gehäuse kurzzeitig ein grösserer Durchtrittsquerschnitt freigegeben wird, als aufgrund der Zustellbewegung eingestellt wäre. Durch die Begrenzung der Schlagamplitude wird dieser Öffnungsfehler berechenbar und kann mittels einer Reduzierung der Zustellbewegung berücksichtigt werden. Sofern diese Schlaghub-Einstellvorrichtung selbst elastische Eigenschaften mit einer sehr hohen Federkonstante aufweist, wird unmittelbar nach dem Aufschlag eine ausserordentlich hohe Beschleunigung ähnlich der Schmitze einer Peitsche in der Gegenrichtung erzeugt. Dadurch löst sich weiteres Dosiergut vom Verschlusselement.

Sowohl die Schlaghub-Einstellvorrichtung als auch die Spiel-Einstellvorrichtung kann zwecks automatischer Verstellung mit einem Stellantrieb versehen sein.

Anstelle eines Spannmechanismus mit einem Hebel kann das Schlagwerk ein mit der Antriebsstange verbundenes Schlagübertragungsglied und eine an der Aufnahmevorrichtung abgestützte Kronenhülse aufweisen. Die Schläge sind durch das Abfahren von an der Kronenhülse ausgebildeten Zacken mittels des Schlagübertragungsgliedes erzeugbar und an die Antriebsstange übertragbar.

Die Schlagfrequenz des vorangehend beschriebenen Schlagwerks ist von der Drehzahl der Antriebsstange abhängig. Dies kann beim Dosieren einiger Pulvertypen zur Beeinträchtigung der Austragungsleistung aus der Dosiereinheit führen. Vorzugsweise ist die Kronenhülse deshalb drehantreibbar an der Aufnahmevorrichtung abgestützt. Durch Verwendung eines Antriebsmotors, welcher die Kronenhülse antreibt, kann die Relativdrehzahl zwischen der Antriebsstange und der Kronenhülse frei gewählt werden.

Der Begriff Kronenhülse umfasst auch Kronenräder und linear ausgebildete, ein Kronenprofil aufweisende Vorrichtungen, beispielsweise Zahnstangen, deren Kronenprofil mit geeigneten Mitteln abgegriffen werden können, um damit Schläge zu erzeugen.

Auch wenn durch die vorliegende Erfindung kein Sensor notwendig ist, kann selbstverständlich ein der Überwachung des Kupplungsvorganges dienender Sensor vorhanden sein. Dieser Sensor kann der Rückmeldung an eine Steuer- und Regeleinheit dienen, dass das Verschlusselement mit der Antriebsstange ordnungsgemäss gekoppelt ist. Das Sensorsignal kann auch dazu verwendet werden, den Nullpunkt festzustellen. Dieser Nullpunkt repräsentiert die axiale Stellung des Verschlusselementes zum Gehäuse der Dosiereinheit, bei welcher Stellung gerade noch kein Öffnungsquerschnitt der Austragungsöffnung vorhanden ist. Dies ist dann wichtig, wenn unterschiedlich hohe Dosiereinheiten verwendet werden sollen, bei denen die jeweilige Kopplungsposition unterschiedlich ist.

Durch die begrenzte Verschiebbarkeit der Antriebsstange kann der Sensor deren Position relativ zu den Anschlägen erfassen. Somit dient die Antriebsstange gleichzeitig als Tastelement des Sensors. Durch eine geeignete Ausgestaltung der Antriebseinheit kann der Sensor mittels eines Antriebsgehäuses vor schädlichen Einflüssen und Verschmutzung durch das Dosiergut optimal geschützt werden, während lediglich die Antriebsstange diesen Einflüssen ausgesetzt ist.

Um betreffend eines unbeabsichtigten Öffnens der Austragungsöffnung noch mehr Sicherheit zu erwirken, kann das Verschlusselement der Dosiereinheit in seiner Grundform zylinderförmig ausgebildet sein, mindestens einen dem Verschliessen der Austragungsöffnung dienenden Verschlussbereich und einen diesem benachbart angeordneten, der Austragung von Dosiergut dienenden Austragungsbereich aufweisen, wobei der Austragungsbereich mit mindestens einer vom Zylindermantel ausgehenden Vertiefung versehen ist.

Das zylinderförmige Verschlusselement weist somit einen in der Austragungsöffnung linear verschiebbaren, zylindrischen Verschlussbereich auf, durch dessen Länge in axialer Richtung die Sensitivität bezüglich eines unbeabsichtigten Öffnens deutlich reduziert werden kann. Ferner ermöglicht dieser zylindrisch ausgebildete Verschlussbereich, dass auch im geschlossenen Zustand der Dosiereinheit Schläge auf das Verschlusselement übertragen werden können, ohne dass die dadurch verursachten axialen Bewegungen des Verschlusselementes in der Austragungsöffnung bereits zu einem Öffnen der Austragungsöffnung führen. Der Vorteil dieser Möglichkeit besteht darin, dass an der Unterseite des Verschlusselements anhaftende, beispielsweise elektrostatisch geladene Pulverpartikel, abgeschüttelt werden können.

Je nach Ausgestaltung des Schlagwerks erfährt die Antriebsstange infolge der Schläge, bezogen auf die Bewegungsrichtung unterschiedliche Beschleunigungswerte. Nachfolgend wird als Spitzenbeschleunigung die durch das Schlagwerk oder gegebenenfalls durch die Verschlussfeder verursachte, grösstmögliche Beschleunigung des Verschlusselementes bezeichnet. So kann aufgrund der Auslegung des Schlagwerks die Spitzenbeschleunigung der Antriebsstange beispielsweise nur in der einen Bewegungsrichtung erfolgen, während in der Gegenrichtung viel tiefere Beschleunigungswerte auftreten. Dies wirkt sich auch auf die Austragungsleistung aus. Mittels umfangreicher Versuche mit verschiedenem Dosiergut konnte festgestellt werden, dass auf das Verschlusselement wirkende Spitzenbeschleunigungen entgegen der Schwerkraft bei einigen Pulvern eine höhere Austragungsleistung erbringen als Spitzenbeschleunigungen in Schwerkraftrichtung. Dies lässt sich damit erklären, dass das in der vorangehend beschriebenen Vertiefung verfüllte Dosiergut infolge seiner Trägheit besser aus der Vertiefung herausgebrochen wird und sich besser vom Verschlusselement löst, wenn die Spitzenbeschleunigung gegen die Schwerkraftrichtung erfolgt. Bei Spitzenbeschleunigungen in Schwerkraftrichtung erfahren diese Pulver eher eine Verdichtung und stecken dadurch tendenziell in der Vertiefung fest.

Wie vorangehend ausgeführt, hat die Spitzenbeschleunigung einen massgeblichen Einfluss auf die Austragungsleistung. Da die Verschlussfeder, beziehungsweise deren Federkraft massgeblich diese Spitzenbeschleunigung beeinflusst, kann in der Dosiereinheit eine auf die Eigenschaften des in der Dosiereinheit enthaltenen Dosierguts abgestimmte Verschlussfeder angeordnet sein. Die unterschiedliche Federcharakteristik kann durch eine entsprechende Dimensionierung der Verschlussfeder und/oder durch ein unterschiedliches Vorspannen der Verschlussfeder erreicht werden. Unterstützt wird die Austragungsleistung zusätzlich durch den weiter oben beschriebenen Einfluss der Schlaghub-Einstellvorrichtung.

Ferner konnte bei vielen Pulvern beim Einziehen des Verschlusselementes in die Austragungsöffnung beobachtet werden, dass Dosiergut, welches sich nur partiell aus der Vertiefung gelöst hat, am Rande der Austragungsöffnung ansteht und aus der Vertiefung gestreift wird.

Selbstverständlich kann das in der Dosiereinheit enthaltene Dosiergut nicht nur ein Pulver, sondern auch eine Paste oder eine Flüssigkeit sein.

Als Kupplung können verschiedene trennbare form- und kraftschlüssige Kupplungstypen wie Reibkupplungen, Klauenkupplungen und dergleichen verwendet werden. Besonders vorteilhaft ist die Verwendung einer profilierten Steckverbindung, beispielsweise mit einer Profilform des Kupplungsteiles, wie sie Schrauben nach EN DIN ISO 14583 aufweisen.

Die Antriebsstange der erfindungsgemässe Dosiervorrichtung kann dieser Norm entsprechend einen Kupplungsbereich mit einem Sechsrund- Profil und das Verschlusselement einen Kupplungsbereich mit einem zum Sechsrund- Profil passenden Innensechsrund- Profil aufweisen.

Die Bereitschaftserstellung der erfindungsgemässen Dosiervorrichtung kann folgende Schritte aufweisen:
a. In einem ersten Schritt wird die Antriebseinheit in Beschickungsposition gebracht,
b. In einem zweiten Schritt wird eine Dosiereinheit in die Aufnahmevorrichtung eingesetzt,
c. In einem dritten Schritt wird die Antriebseinheit unter langsam drehender Antriebsstange linear in Richtung zur Dosiereinheit hin verschoben, bis der Kupplungsbereich der Antriebsstange in den Kupplungsbereich des Verschlusselementes eingreift und ein Sensor den Abschluss des Kupplungsvorganges feststellt und damit die Betriebsbereitschaft der Dosiervorrichtung an eine Steuer- und Regeleinheit der Dosiervorrichtung meldet.

Einzelheiten der erfindungsgemässen Dosiervorrichtung ergeben sich anhand der Beschreibung der in den Zeichnungen dargestellten Ausführungsbeispiele. Es zeigen:
- Fig. 1: die schematische Darstellung einer Dosiervorrichtung in einer ersten Ausführung in Aufsicht und im Schnitt , wobei die Antriebsstange nicht mit dem Verschlusselement gekoppelt ist;
- Fig. 2: die Dosiervorrichtung in Aufsicht und im Schnitt aus Figur 1, wobei die Antriebsstange mit dem Verschlusselement gekoppelt ist;
- Fig. 3: die schematische Darstellung einer Dosiervorrichtung in einer zweiten Ausführung in Aufsicht und im Schnitt, wobei die Antriebsstange nicht mit dem Verschlusselement gekoppelt ist;
- Fig. 4: die schematische Darstellung einer Dosiervorrichtung in einer dritten Ausführung in Aufsicht und im Schnitt, wobei die Antriebsstange nicht mit dem Verschlusselement gekoppelt ist;
- Fig. 5: die Dosiervorrichtung in Aufsicht und im Schnitt aus Figur 4, wobei die Antriebsstange mit dem Verschlusselement gekoppelt ist;
- Fig. 6: die schematische Darstellung einer Dosiervorrichtung in einer vierten Ausführung in Aufsicht und im Schnitt, wobei die Antriebsstange nicht mit dem Verschlusselement gekoppelt ist;
- Fig. 7: eine Dosiereinheit mit einem Verschlusselements in der Offenstellung in dreidimensionaler Darstellung, wobei deren Gehäuse der Länge nach aufgeschnitten ist;
- Fig. 8: schematisch die Bewegungsverläufe verschiedener Elemente während eines Kopplungs- Öffnungs- Schliess- und Entkopplungsvorganges der in den Figuren 3 und 4 dargestellten Dosiervorrichtung.

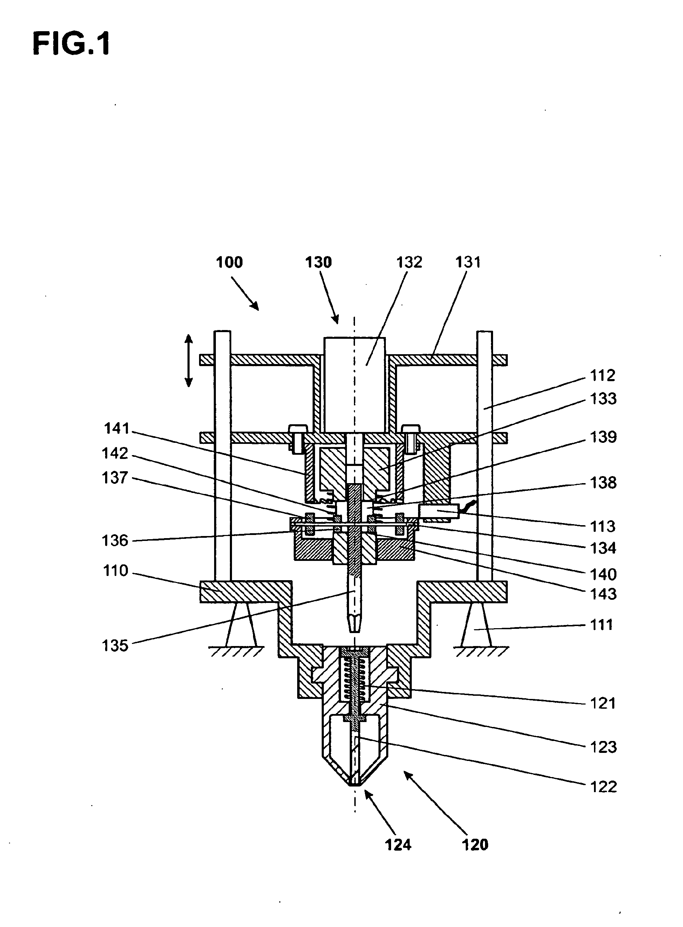

In Figur 1 ist eine Dosiervorrichtung 100 in einer ersten Ausführung in Aufsicht und im Schnitt schematisch wiedergegeben. Die Dosiervorrichtung weist im Wesentlichen eine Aufnahmevorrichtung 110 und eine Antriebseinheit 130 auf. Die Aufnahmevorrichtung 110 ist, symbolisch mit Auflagern 111 dargestellt, am Untergrund, beispielsweise einem Arbeitstisch fest abgestützt. Ferner weist die Aufnahmevorrichtung 110 zwei Linearführungen 112 auf, an denen ein Träger 131 der Antriebseinheit 130 linear geführt ist.

Es versteht sich von selbst, dass zur linearen Verschiebung der Antriebseinheit 130 relativ zur Aufnahmevorrichtung 110, zwischen der Antriebseinheit 130 und der Aufnahmevorrichtung 110 ein hier nicht dargestellter, geeigneter Antrieb vorhanden sein muss. Dies kann beispielsweise ein selbsthemmender Spindelantrieb sein. Unter Selbsthemmung wird die Eigenschaft eines mechanischen Systems verstanden, dass eine Bewegung nur dann stattfindet, wenn der Antrieb aktiviert und nicht durch externe Einflüsse hervorgerufen wird, beispielsweise unter Einwirkung der Schwerkraft. Bei der vorliegenden Erfindung wird die lineare Verschiebung oder präziser umschrieben, die Zustell-, Öffnungs- und Schliessbewegung nur durch die Drehung einer Spindel des Spindelantriebs bewirkt. Deren Übersetzungsverhältnis beziehungsweise deren Gewindesteigung wird so gewählt, dass die Reibungskräfte zwischen der Spindel und der Spindelmutter grösser sind, als die Gewichtskraft der Antriebseinheit 130.

Die Antriebseinheit 130 weist einen Motor 132 auf, welcher zwischen den Linearführungen 112 angeordnet mit dem Träger 131 verbunden ist. Als Motor 132 eignen sich die meisten handelsüblichen Elektromotoren, Schrittmotoren, Getriebemotoren, aber auch Pressluft- oder Hydraulikmotoren sind einsetzbar. Mit der Motorwelle des Motors 132 ist eine Mitnehmerhülse 133 verbunden, welche das Drehmoment des Motors 132 über einen Mitnehmer-Rollendorn 134 an eine in der Mitnehmerhülse 133 linear verschiebbar geführte, drehantreibbare Antriebsstange 135 überträgt. Die Drehachse der Antriebsstange 135 verläuft im Wesentlichen in vertikaler Richtung.

Der Mitnehmer-Rollendorn 134 weist im vorliegenden Ausführungsbeispiel vier drehbar gelagerte Rollen 136, 137 auf. Die beiden nahe der Drehachse angeordneten inneren Rollen 136 sind zugleich in einem, die Mitnehmerhülse 133 orthogonal zur Drehachse durchbrechenden Schlitz 138 angeordnet und dienen der Drehmomentübertragung des Motordrehmoments. Ferner begrenzt die Längenausdehnung des Schlitzes 138, einen gegen den Motor 139 gerichteten oberen Anschlag 139 und einen vom Motor wegweisenden unteren Anschlag 140 bildend, die lineare Verschiebbarkeit der Antriebsstange 135 in axialer Richtung. Zwischen dem Mitnehmer-Rollendorn 134 und der Mitnehmerhülse 133 ist zudem eine Rückstellfeder 142 angeordnet, welche die inneren Rollen 136 gegen den unteren Anschlag 140 drückt. Dadurch weist das vom Motor wegweisende Ende der Antriebsstange 135 im ungekoppelten Zustand stets eine definierte Lage zum Träger 131 auf.

Die äusseren Rollen 137 dienen der Übertragung von Schlägen auf die Antriebsstange 135. Diese Schläge werden mittels einer Kronenhülse 141 erzeugt, welche starr am Träger 131 festgelegt ist. Indem die äusseren Rollen 137 das gezackte Kronenprofil der Kronenhülse 141 infolge der Drehung der Antriebsstange 135 abgreifen, werden oszillierende Bewegungen beziehungsweise Schläge, über den mit der Antriebsstange 135 fest verbundenen Mitnehmer-Rollendorn 134 an die Antriebsstange 135 übertragen. Die Anzahl Schläge pro Umdrehung der Antriebsstange 135 richtet sich daher nach der Anzahl Zacken des Kronenprofils. Mit der Ausgestaltung des Kronenprofils und mit der Drehzahl der Antriebsstange 135 kann die Schlagenergie der einzelnen Schläge gewählt werden.

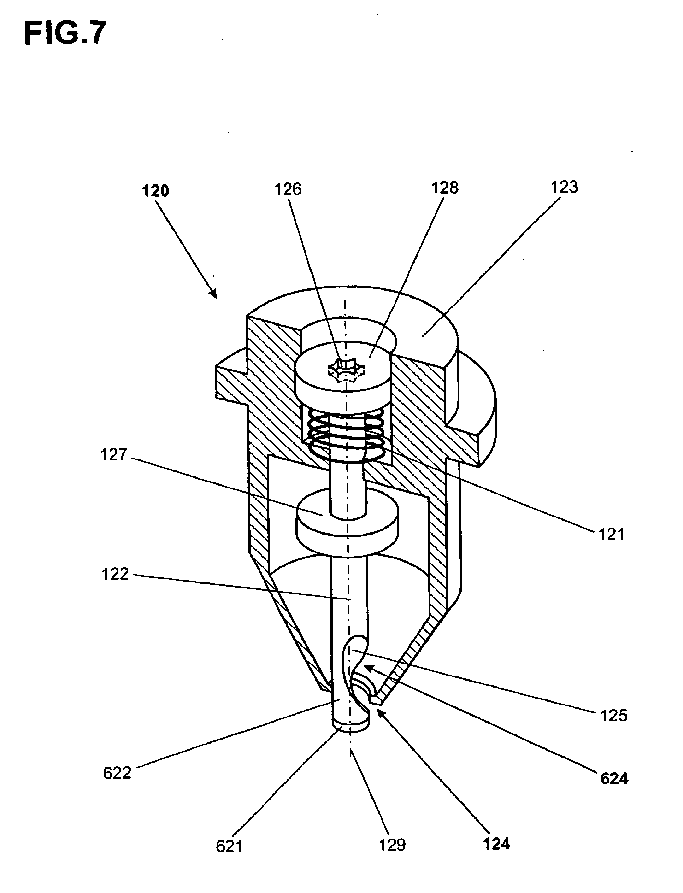

Die Figur 1 zeigt die Dosiervorrichtung 100 im Betriebszustand, das heisst, dass in die Aufnahmevorrichtung 110 eine Dosiereinheit 120 eingesetzt ist. Die Dosiereinheit 120 weist ein Gehäuse 123, ein Verschlusselement 122 und eine Verschlussfeder 121 auf. Die Verschlussfeder 121 hält das Verschlusselement 122 solange in einer Geschlossenstellung, bis die Federkraft der Verschlussfeder 121 durch Einwirkung der Antriebsstange 135 überwunden wird. In der Geschlossenstellung verschliesst das Verschlusselement 122 eine am Gehäuse 123 ausgebildete Austragungsöffnung 124. Der Aufbau und die Funktionsweise der Dosiereinheit 120 und die Ausgestaltung des Verschlusselements 122 werden weiter unten in der Beschreibung von Figur 7 ausführlicher behandelt.

Vorzugsweise wird das Kronenprofil sägezahnartig ausgestaltet, wobei mittels der ansteigenden Flanken des Kronenprofils ein Federelement, beispielsweise die Verschlussfeder 121 der Dosiereinheit 120 gespannt wird, während mittels der nahezu vertikal ausgerichteten, abfallenden Flanken das gespannte Federelement freigegeben wird. Ein solcherart ausgestaltetes Kronenprofil gibt zwar die Abgreifrichtung beziehungsweise die Drehrichtung vor, ermöglicht aber, im Bereich der abfallenden Flanken sehr hohe Beschleunigungswerte des Verschlusselementes 122 zu erzielen.

Am Mitnehmer-Rollendorn 134 ist ein Positionsring 143 angeordnet, über welchen die momentane Lage der Antriebsstange 135 zum Träger 131 abgegriffen werden kann. Vorzugsweise geschieht dies mittels eines Sensors 113, beispielsweise ein optischer, induktiver oder mittels Schallwellen arbeitender Sensor. Die Überwachung der Lage bietet verschiedene Vorteile. So kann beim Einsatz unterschiedlich hoher Dosiereinheiten 120 auf einfache Weise der Kupplungsvorgang überwacht und insbesondere der Nullpunkt des Systems festgestellt werden. Dieser Nullpunkt repräsentiert den Ausgangspunkt der Öffnungsbewegung des Verschlusselements 122 relativ zum Gehäuse 123 und somit genau derjenige Punkt, bei welchem die inneren Rollen 136 den oberen Anschlag 139 und/oder die äusseren Rollen 137 die Kronenhülse 141 berühren. Selbstverständlich kann an Stelle des Mitnehmer-Rollendorns 134 und den Rollen 136, 137 auch ein einfaches Gleitstück mit vier Gleitstellen eingesetzt werden, sofern aufgrund minimaler Flächenpressung kein oder nur geringer Abrieb an den Gleitstellen entsteht.

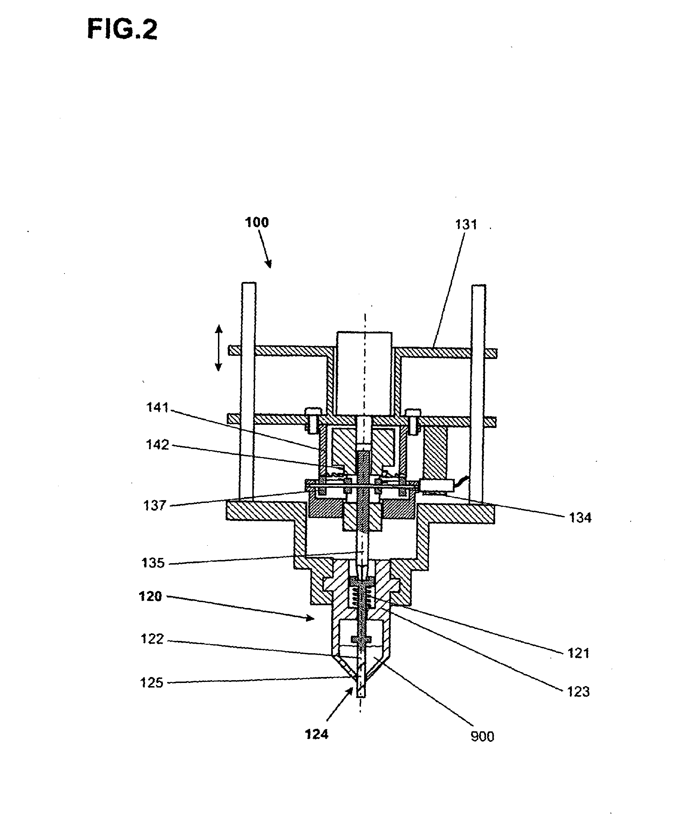

In Figur 2 ist die Dosiervorrichtung 100 aus Figur 1 in Aufsicht und im Schnitt dargestellt, wobei die Antriebsstange 135 mit dem Verschlusselement 122 gekoppelt ist. Der Träger 131 ist soweit zugestellt, dass der Nullpunkt überschritten ist und eine am Verschlusselement 122 ausgebildete Aussparung 125 in der Austragungsöffnung 124 derart angeordnet ist, dass ein Austrittsquerschnitt freigegeben wird, durch welchen Austrittsquerschnitt im Innern des Gehäuses 123 enthaltenes Dosiergut 900 aus der Dosiereinheit 120 austreten kann.

In der Beschreibung der weiteren Figuren entsprechen alle Elemente mit denselben Nummern weitgehend den in Figur 1 und Figur 2 beschriebenen Bauteilen.

In der Figur 2 ist deutlich erkennbar, dass die äusseren Rollen 137, unter Überwindung der Schwerkraft und der Federkraft der Rückstellfeder 142, durch die Federkraft der Verschlussfeder 121 gegen das Kronenprofil der Kronenhülse 141 gedrückt wird. Sobald die Antriebsstange 135 in Drehung versetzt wird, greifen die mit der Antriebsstange 135 über den Mitnehmer-Rollendorn 134 verbundenen äusseren Rollen 137 das Kronenprofil ab, wodurch eine oszillierende, lineare Bewegung auf die Antriebsstange 135 erzeugt und auf das Verschlusselement 122 übertragen wird.

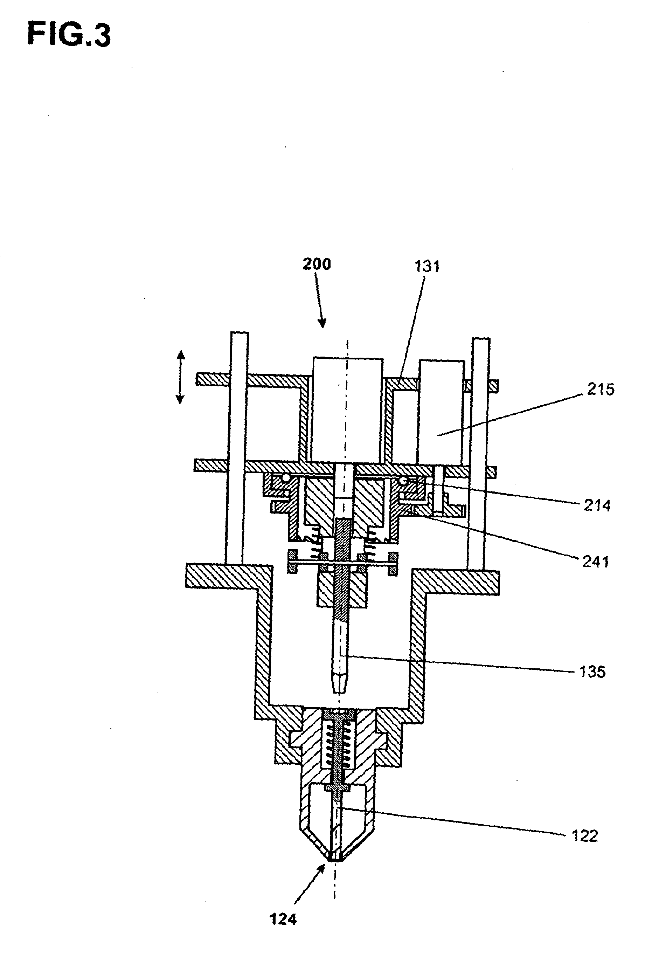

Die Figur 3 zeigt die schematische Darstellung einer Dosiervorrichtung 200 in einer zweiten Ausführung in Aufsicht und im Schnitt, wobei die Antriebsstange 135 nicht mit dem Verschlusselement 122 gekoppelt ist. Die zweite Ausführung weist an Stelle der mittels Schrauben mit dem Träger 110 starr verbundenen Kronenhülse, eine drehantreibbar ausgestalteten Kronenhülse 241 auf. Diese ist über ein Drehlager 214 am Träger 131 abgestützt und kann durch einen Motor 215 angetrieben werden. Die drehantreibbare Kronenhülse 241 ist in der vorliegenden Ausführung koaxial zur Antriebsstange 135 angeordnet. Dies ist aber nicht zwingend notwendig, die Drehachse der Kronenhülse 241 kann auch unter einem beliebigen Winkel zur Mittellängsachse der Antriebsstange 135 angeordnet sein. Um Schläge zu erzeugen, muss die Antriebsstange 135 nicht mehr in Drehung versetzt werden. Die Drehung der Antriebsstange 135 kann vielmehr bedarfsgemäss gewählt werden, ebenso die Schlagfrequenz.

Die Drehung der Antriebsstange 135 und des Verschlusselements 122 kann zum Zermahlen von Pulverpartikeln im Bereich der Austragungsöffnung führen. Gerade bei zerstörungssensitiven Pulvern, beispielsweise Wirkstoffen von Medikamenten kann sich die Wirkung des Wirkstoffes alleine durch die Zehrmahlung der Pulverpartikel infolge einer vergrösserten Oberfläche oder einer zerstörten Oberflächenstruktur drastisch ändern. Mittels der zweiten Ausführung mit einer drehantreibbaren Kronenhülse 241 können solche Effekte weitgehend vermieden werden.

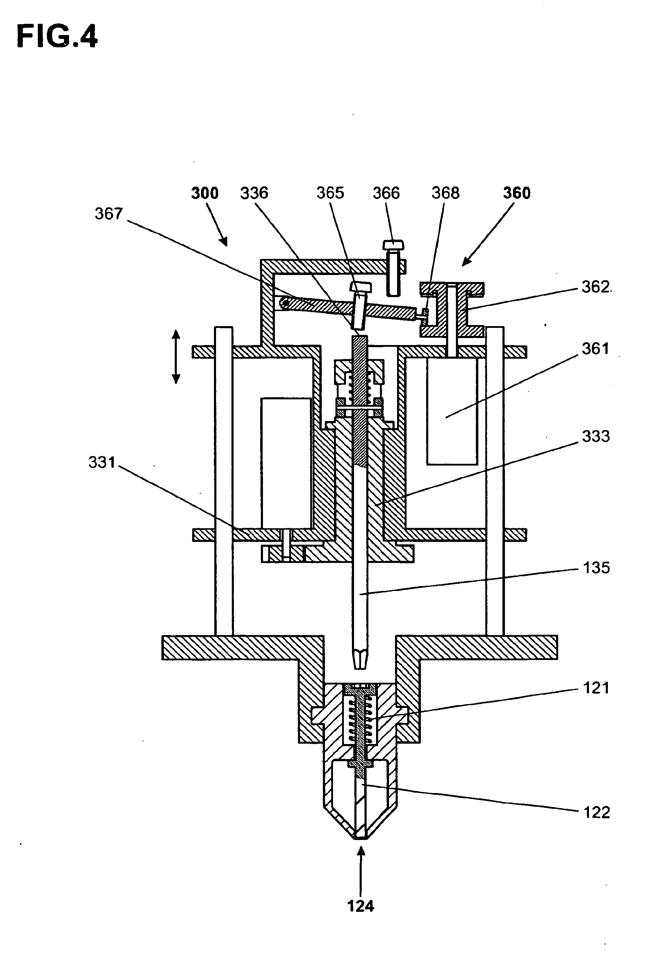

Die Härte der Schläge beziehungsweise deren Periodendauer und Amplitude sind abhängig von der Drehzahl und dem Kronenprofil. Dieser Umstand schränkt die Einstellbarkeit der Schlagenergie stark ein. Um eine auf das Dosiergut besser abstimmbare Dosiervorrichtung zur Verfügung zu stellen, werden die in Figur 4 bis Figur 6 dargestellten Ausführungsvarianten vorgeschlagen.

Figur 4 zeigt die schematische Darstellung einer Dosiervorrichtung 300 in einer dritten Ausführung in Aufsicht und im Schnitt, wobei die Antriebsstange 135 nicht mit dem Verschlusselement 122 gekoppelt ist. Die dritte Ausführung weist an Stelle einer Kronenhülse und der äusseren Rollen ein Schlagwerk 360 auf.

Das Schlagwerk 360 weist einen Hebel 367 und einen Spannmechanismus 361 auf, dessen Kronenrad 362 durch einen Motor angetrieben wird. Das erste Hebelende des Hebels 367 ist drehbar am Träger 331 gelagert und das zweite Hebelende mit einer Tastrolle 368 versehen, auf welche Tastrolle 368 der Spannmechanismus 361 einwirkt. An der Antriebsstange 135 ist eine Schlagfläche 336 ausgebildet. Beim Koppeln der Antriebsstange 135 mit dem Verschlusselement 122 wird die Antriebsstange 135 relativ zur Mitnehmerhülse 333 linear verschoben, bis über die Schlagfläche 336 und eine Spiel-Einstellvorrichtung 365 die Tastrolle 368 des Hebels 367 mit dem Kronenrad 362 des Spannmechanismus 361 in Anlage steht. Bei einer weiteren Zustellbewegung des Trägers 331 lässt sich die Antriebsstange 135 infolge des Anstehens der Tastrolle 368 am Kronenrad 362 nicht mehr gegen die Zustellrichtung verschieben, wodurch die Federkraft der Verschlussfeder 121 überwunden und die Austragungsöffnung 124 geöffnet wird.

Sobald der Motor das Kronenrad 362 in Drehung versetzt, greift die Tastrolle 368 deren Kronenprofil ab und überträgt via Hebel 367 die dadurch erzeugten Schläge auf die Antriebsstange 135. Mittels der Schlaghub-Einstellvorrichtung 366 kann die Schlagamplitude dadurch begrenzt werden, dass der Hebel 367 an der Schlaghub-Einstellvorrichtung 366 ansteht, bevor die Tastrolle 368 den Grund der Kronenprofil-Nuten erreicht hat.

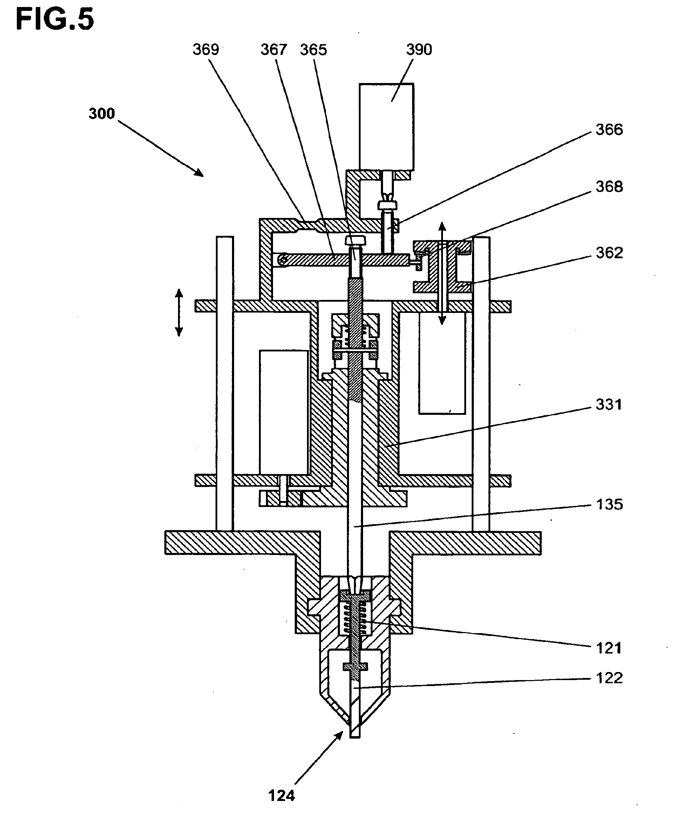

In Figur 5 ist im Wesentlichen die Dosiervorrichtung 300 aus Figur 4 in Aufsicht und im Schnitt dargestellt, wobei die Antriebsstange 135 mit dem Verschlusselement 122 gekoppelt ist. Im Vergleich mit der Figur 4 ist klar ersichtlich, wie die Verschlussfeder 121 die Tastrolle 368 gegen das Kronenrad 362 presst. Sobald das Kronenrad 362 zu drehen beginnt, wird dessen Kronenprofil durch die Tastrolle 368 abgegriffen, wodurch Schläge erzeugt werden, die über den Hebel 367 auf die Antriebsstange 135 und das Verschlusselement 122 übertragen werden. Ferner ist angedeutet, dass die Schlaghub-Einstellvorrichtung 366 mit einem Stellantrieb 390 verbunden ist. Dadurch kann während des Betriebes die Schlagenergie und die Schlagamplitude verändert werden. Die Schlaghub-Einstellvorrichtung 366 weist selbst elastische Eigenschaften mit einer sehr hohen Federkonstante auf, die in Figur 5 symbolisch durch ein am Träger 331 ausgebildetes Biegelager 369 angedeutet sind. Durch diese elastischen Eigenschaften der Schlaghub-Einstellvorrichtung 366 wird unmittelbar nach dem Aufschlag eine ausserordentlich hohe Beschleunigung des Hebels 367, der Verschlussstange 135 und des Verschlusselements 122 ähnlich der Schmitze einer Peitsche in der Gegenrichtung erzeugt. Dadurch löst sich weiteres Dosiergut vom Verschlusselement 122.

Sobald die Antriebsstange 135 mit dem Verschlusselement 122 gekoppelt ist, wird durch weiteres Verschieben des Trägers 331 in Zustellrichtung das Verschlusselement 122 relativ zum Gehäuse 123 verschoben und die Austragungsöffnung 124 geöffnet. Selbstverständlich kann aber auch das Kronenrad 362 linear in vertikaler Richtung verstellbar sein. Durch diese Verstellbarkeit könnte das Öffnen der Austragungsöffnung 124oder die Feinjustierung des Öffnungsquerschnitts der Austragungsöffnung 124 erfolgen. Dadurch könnte der hier nicht dargestellte Zustellantrieb des Trägers 331 entlastet werden, beziehungsweise die erforderliche Positioniergenauigkeit des Zustellantriebs könnte reduziert werden.

Auch die Spiel-Einstellvorrichtung 365 könnte selbstverständlich mit einem Stellantrieb versehen werden, um entsprechende Einstellungen auch während des Betriebes der Dosiervorrichtung 300 zu ermöglichen.

Alle vorangehenden Ausführungen weisen Schlagwerke auf, deren Schläge auf die Antriebsstange derart einwirken, dass die Spitzenbeschleunigung jeweils gegen die Richtung der Schwerkraft gerichtet ist. Nachfolgend wird die Ausführung einer Dosiervorrichtung beschrieben, auf deren Antriebsstange das Schlagwerk eine Spitzenbeschleunigung in Richtung der Schwerkraft erwirkt.

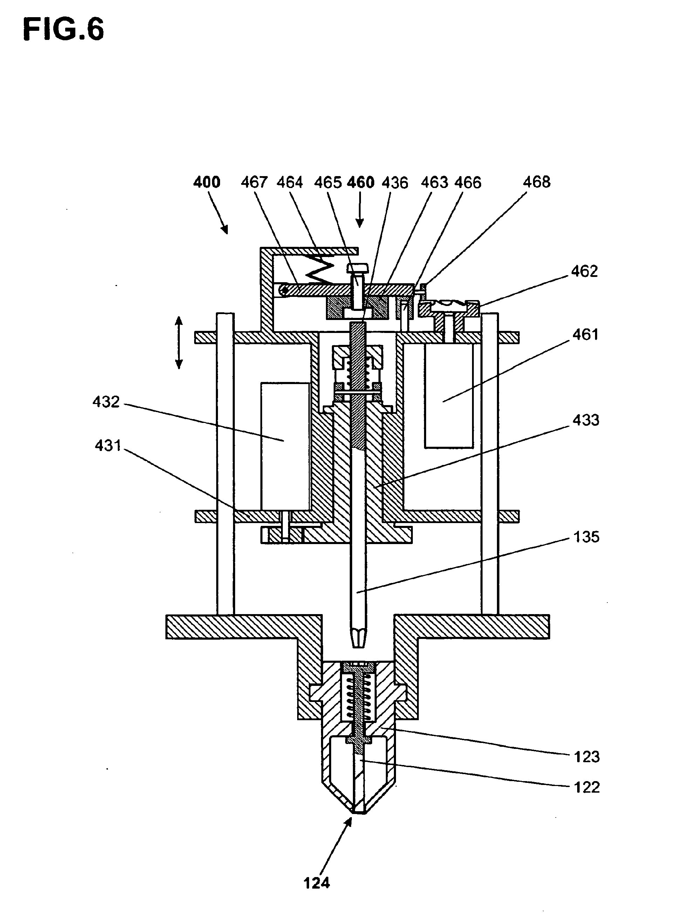

Figur 6 zeigt die schematische Darstellung einer Dosiervorrichtung 400 in einer vierten Ausführung in Aufsicht und im Schnitt, wobei die Antriebsstange 135 nicht mit dem Verschlusselement 122 gekoppelt ist. Die vierte Ausführung weist an Stelle der Kronenhülse und der äusseren Rollen ein Schlagwerk 460 auf. Das Schlagwerk weist einen Spannmechanismus 461 auf, durch welchen eine Hammermasse 463 gegen die Schwerkraft und gegen eine Schlagfeder 464 gespannt, beziehungsweise freigegeben wird. Die Hammermasse 463 ist zu Führungszwecken an einem Hebel 467 festgelegt, dessen erstes Hebelende drehbar am Träger 431 gelagert, und dessen zweites Ende mit einer Tastrolle 468 versehen ist, auf welche Tastrolle 468 der Spannmechanismus 461 einwirkt. Selbstverständlich sind weitere Führungen der Hammermasse 463, beispielsweise Linearführungen denkbar.

Der in Figur 6 dargestellte Spannmechanismus 461 weist im Wesentlichen einen Motor und ein Kronenrad 462 auf. Selbstverständlich können auch weitere Lösungen zum Spannen und Freigeben der Hammermasse 463 eingesetzt werden. Die Hammermasse 463 wird nach der Freigabe durch den Spannmechanismus 461 infolge der Erdbeschleunigung und der Federkraft der Schlagfeder 464 in Richtung einer an der Antriebsstange 135 ausgebildeten Schlagfläche 436 beschleunigt, bis sie auf diese auftrifft und in der Antriebsstange 135 eine Schockwelle erzeugt.

Vorzugsweise weist die Hammermasse 463 mindestens eine, der Einstellung des Schlagspiels zwischen der Hammermasse 463 und der Schlagfläche 436 dienende Spiel- Einstellvorrichtung 465, insbesondere eine blockierbare Spieljustierschraube auf. Durch die Einstellung des Schlagspiels kann die Schlagenergie der Hammermasse 463 eingestellt werden, da mit zunehmendem Spiel die Beschleunigungsstrecke der Hammermasse 463 variiert werden kann.

Ferner kann das Schlagwerk 460 auch eine Schlaghub-Einstellvorrichtung 466, insbesondere einen einstellbaren Endanschlag für die Hammermasse 466 aufweisen. Dieser Endanschlag dient dazu, die Schlagamplitude zu begrenzen. Einerseits wird dadurch auch die Schlagenergie beeinflusst, andererseits kann der Öffnungsfehler des Durchlassquerschnitts der Austragungsöffnung 124 infolge der durch die Schläge verursachten, kurzzeitigen Veränderung der axialen Stellung des Verschlusselementes 122 zum Gehäuse 123 begrenzt werden. Dadurch wird dieser Öffnungsfehler berechenbar und kann mittels einer Reduzierung der Zustellbewegung des Trägers 431 beziehungsweise der Antriebsstange 135 berücksichtigt werden.

Die Antriebsstange 135 ist in einer Mitnehmerhülse 433 analog der in Figur 4 dargestellten Mitnehmerhülse linear verschiebbar gelagert. Die Mitnehmerhülse 433 wird ebenfalls durch einen Motor 432 angetrieben.

Die Drehachsen der Antriebsstange verlaufen in den Ausführungsbeispielen in vertikaler Richtung. Es versteht sich von selbst, dass auch Ausführungen der vorliegenden Erfindung möglich sind, deren Antriebsstangen unter einem beliebigen Winkel zur vertikalen Richtung angeordnet sein können.

In der Figur 7 ist eine Dosiereinheit 120 mit einem Verschlusselement 122 in dreidimensionaler Darstellung gezeigt, wobei das Gehäuse 123 der Dosiereinheit 120 der Länge nach aufgeschnitten ist. Die Austrittsöffnung 124 ist teilweise geöffnet. Das Verschlusselement 122 ist zylindrisch ausgebildet und erstreckt sich entlang der Mittellängsachse 129 der Dosiereinheit 120. Das Verschlusselement 122 ist sowohl um die Mittellängsachse 129 rotierbar, als auch entlang dieser verschiebbar ausgestaltet. In Bezug auf die Betriebsstellung der Dosiereinheit 120 ist am oberen Ende des Verschlusselements 122 ein Kopfteil 128 angeordnet, an welchem Kopfteil 128 eine Kupplungshälfte 126, in Figur 6 eine Innensechsrund- Sacklochbohrung, ausgebildet ist. In diese Kupplungshälfte ist die hier nicht dargestellte Antriebsstange einsteckbar.

Zwischen dem Kopfteil 128 und dem Gehäuse 123 ist die Verschlussfeder 121 angeordnet und hält durch ihre Federkraft das Verschlusselement 122 in ungekoppeltem Zustand in einer Geschlossenstellung, wobei ein am Verschlusselement 122 ausgebildeter Bund 127 durch Anlage am Gehäuse 123 die Verschlussposition der Dosiereinheit 120 vorgibt.

Das Verschlusselement 122 weist einen Verschlussbereich 621 auf, welcher zylinderförmig ausgestaltet ist und im Fall der Geschlossenstellung passgenau die Austrittsöffnung 124 verschliesst. Im Fall des Dosierens ist die Austrittsöffnung 124 zumindest teilweise geöffnet und bildet so eine Durchtrittsöffnung, welche einer wirksamen Austrittsöffnung entspricht. Dabei ragt ein dem Verschlussbereich 621 benachbart angeordneter Austragungsbereich 622 des Verschlusselements 122 in die Austrittsöffnung 124 hinein.

Je länger der zylindrische Verschlussbereich 621 in Richtung der Mittellängsachse 129 ausgebildet ist, desto unempfindlicher ist die Dosiereinheit 120 gegen unbeabsichtigtes Öffnen während des Kupplungsvorganges. Ferner lässt ein länger ausgebildeter Verschlussbereich 621 auch bei geschlossener Austrittsöffnung 124 zu, dass Schläge auf das Verschlusselement 122 einwirken können, ohne dass infolge der Schläge die Austragungsöffnung 124 geöffnet wird. Zudem kann sich beim Schliessen der Austragungsöffnung 124 zwischen dem Bund 127 und dem Gehäuse 123 etwas Dosiergut ansammeln und dort eingeklemmt werden, wodurch das Verschlusselement 122 die ursprüngliche Geschlossenstellung in Bezug zum Gehäuse 123 nicht mehr ganz einnehmen kann. Durch einen länger ausgebildeten Verschlussbereich 621 kann das Problem, dass infolge eingeklemmten Dosierguts sich die Dosiereinheit 120 nicht mehr vollständig schliessen lässt, ebenfalls entschärft werden.

Im Austragungsbereich 622 weist das Verschlusselement 122 eine Vertiefung in Form einer Aussparung 125 auf. Die Oberfläche der Aussparung 125 ist stetig und bildet eine Austragungsfläche 624. Der Verschlussbereich 621 ist bei dieser Ausführungsform in der Betriebsstellung unterhalb des Austragungsbereichs 622 angeordnet, das heisst er bildet das untere Ende des Verschlusselements 122. Auf diese Weise kann die die Unterkante Verschlusselements 122 bildende Stirnfläche die Austrittsöffnung 124 der Dosiereinheit 120 bündig abschliessen. Dabei besitzt die Austrittsöffnung 124 einen Durchmesser, der im Wesentlichen dem Durchmesser des Verschlussbereichs 621 entspricht, so dass ein passgenaues Ein- und Ausfahren des Verschlusselements 122 in die bzw. aus der Austrittsöffnung 124 und damit ein vollständiges Verschliessen derselben möglich ist.

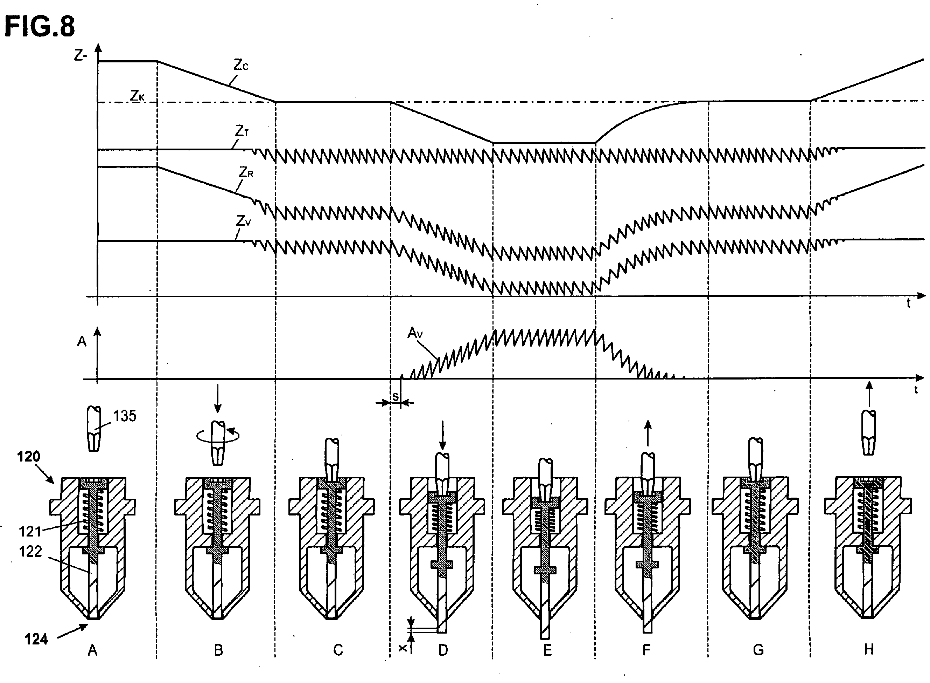

Figur 8 zeigt schematisch die Bewegungsverläufe Z_{C}, Z_{T}, Z_{R}, Z_{V} verschiedener Elemente sowie den Verlauf der Querschnittsflächenänderung der Austragungsöffnung A_{V}, während eines Kopplungs-, Öffnungs-, Schliess-, und Entkopplungsvorganges der in den Figuren 3 und 4 dargestellten Dosiervorrichtung. Die Bewegungsverläufe Z_{C}, Z_{T}, Z_{R}, Z_{V} sind in Phase A bis Phase H unterteilt. Unterhalb der Bewegungsverläufe Z_{C}, Z_{T}, Z_{R}, Z_{V} ist für jede Phase ein Schnittbild der Dosiereinheit 120 aus Figur 7 mit einer phasentypischen Stellung des Verschlusselementes 122 dargestellt.

Die Zustellbewegung des Trägers ist anhand des Bewegungsverlaufs Z_{C} dargestellt. In der Phase A kann in die nicht dargestellte Aufnahmevorrichtung eine Dosiereinheit 120 eingesetzt werden, da das Verschlusselement 122 und die Antriebsstange 135 noch nicht gekoppelt sind.

In Phase B wird der Träger gegen die Dosiereinheit 120 zugestellt, wodurch sich die Antriebsstange 135, wie der Bewegungsverlauf der Antriebsstange Z_{R} zeigt, der Dosiereinheit 120 nähert. Vorzugsweise wird dabei die Antriebsstange 135 in Drehung versetzt, um den Kopplungsvorgang zu unterstützen. Dies ist insbesondere dann wichtig, wenn wie in den Figuren 1 bis 8 dargestellt, eine steckbare, formschlüssige Kupplung zur Verbindung des Verschlusselements 122 mit der Antriebsstange 135 verwendet wird. Die minimale Umdrehungsgeschwindigkeit der Antriebsstange 135 ist dabei abhängig von der Zustellgeschwindigkeit des Trägers und der begrenzten Verschiebbarkeit der Antriebsstange 135 entgegen der Zustellbewegung, da beispielsweise das Sechsrund-Profil der Antriebsstange nur alle 60° des Drehwinkels in das Innensechsrund- Profil einsteckbar ist. Gegen Ende der Phase B ist der Kopplungspunkt Z_{K} erreicht, das heisst, dass die Antriebsstange 135 mit dem Verschlusselement 122 gekoppelt ist, und die Antriebsstange 135 wie aus der Figur 4 und Figur 5 ersichtlich, die am Hebel angeordnete Tastrolle gegen das Kronenprofil drückt. Die Gewichtskraft der Antriebsstange 135 lastet nun auf der Verschlussfeder 121. Wie in Phase B dargestellt, greift die Tastrolle in Abhängigkeit der Zustellbewegung zunehmend das Kronenprofil ab, wodurch die Schläge des Schlagwerks erzeugt und auf die Antriebsstange 135 übertragen werden. Der Bewegungsverlauf der Schläge des Schlagwerks Z_{T} ist in Figur 8 im Vergleich zum Bewegungsverlauf der Zustellbewegung des Trägers Z_{C} stark übertrieben dargestellt, um das Zusammenwirken der Bewegungsverläufe Z_{C}, Z_{T}, Z_{R}, R_{V} besser zu illustrieren. Sobald Schläge durch das Schlagwerk erzeugt werden, übertragen sich diese, wie in Figur 8 im Bewegungsverlauf des Verschlusselements Z_{V} dargestellt, auch auf das mit der Antriebsstange 135 gekoppelte Verschlusselement 122. Die Austragungsöffnung 124 wird aber durch die kleine Amplitude der Schläge noch nicht geöffnet.

In Phase C findet keine Zustellbewegung des Trägers statt. Dies kann notwendig sein, wenn das Dosiergut in der Dosiereinheit 120 beispielsweise durch rühren oder vibrieren vor dem Dosiervorgang noch konditioniert werden soll. Selbstverständlich kann die Zustellbewegung des Trägers auch ohne Unterbruch erfolgen, wodurch Phase D direkt an Phase B anschliesst.

In Phase D wird der Träger weiter in Richtung der Dosiereinheit 120 zugestellt, die Antriebsstange 135 kann aber aufgrund ihrer Anlage am Hebel und aufgrund der Anlage der Tastrolle am Kronenrad nicht weiter entgegen der Zustellbewegung verschoben werden. Dadurch wird die Antriebsstange 135 weiter in Richtung der Dosiereinheit 120 zugestellt, oder genauer umschrieben, die Öffnungsbewegung eingeleitet, und drückt die Verschlussfeder 121 zusammen, womit die Austragungsöffnung 124 geöffnet wird und eine ansteigende Querschnittflächenänderung der Austragungsöffnung A_{V} erfolgt. In Figur 8, Phase D erfolgt das Öffnen der Austragungsöffnung 124 mit einer Verzögerung S, welche durch die Länge X des Verschlussbereichs des Verschlusselements 122 verursacht wird.

In Phase E ist die Austragungsöffnung 124 der Dosiereinheit 120 vollständig geöffnet, das heisst, dass eine ausschliesslich periodische, von der Schlagfrequenz des Schlagwerks vorgegebene Querschnittsflächenänderung des Austragungsquerschnitts A_{V} erfolgt.

Sobald sich die ausgetragene Menge Dosiergut dem Zielgewicht nähert, wird, wie in Phase F dargstellt, eine Bewegung des Trägers entgegen der Zustellrichtung beziehungsweise die Schliessbewegung eingeleitet. Der Bewegungsverlauf entgegen der Zustellbewegung des Trägers Z_{C} ist in Figur 8 nicht linear dargestellt. Dies soll veranschaulichen, dass sowohl die Öffnungsbewegung wie auch die Schliessbewegung nicht linear erfolgen müssen. Die Schliessung der Austragungsöffnung 124 erfolgt aufgrund der Länge X des Verschlussbereichs, bevor der Kupplungspunkt Z_{K} erreicht wird.

In Phase G weist die Dosiervorrichtung dieselbe Ausgangslage wie in Phase C auf. Sofern beispielsweise an der unteren Fläche des Verschlusselements 122 Partikel des Dosierguts anhaften, können diese durch die Schläge des Schlagwerks vom Verschlusselement 122 abgeschüttelt werden. Die Phase G kann die Ausgangslage für eine weitere Dosierung gemäss der Phase D bis Phase F sein. Sofern kein Dosiergut mehr ausgetragen werden soll, kann wie in Phase H dargestellt, mittels der Bewegung des Trägers entgegen der Zustellrichtung das Verschlusselement 122 von der Antriebsstange 135 entkoppelt werden.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Insbesondere sind weitere Ausführungen denkbar, die zwei oder mehrere Schlagwerke aufweisen, welche auf die Antriebsstange, aber beispielsweise auch auf das Gehäuse der Dosiereinheit einwirken. Ebenso ist denkbar, dass ein Schlagwerk zwei Spannmechanismen oder zumindest zwei Kronenräder oder Kronenhülsen aufweist. In Kombination mit einer manuell lösbaren Kupplung und einer bistabilen Verschlussfeder könnten dadurch hohe Beschleunigungen in Richtung der Schwerkraft und gegen die Richtung der Schwerkraft erzielt werden. Dementsprechend werden solche Kombinationen und Alternativen als Teil der Erfindung betrachtet.

### Bezugszeichenliste

- 400, 300, 200, 100: Dosiervorrichtung
- 110: Aufnahmevorrichtung
- 112: Führung
- 113: Sensor
- 120: Dosiereinheit
- 121: Verschlussfeder
- 122: Verschlusselement
- 123: Gehäuse
- 124: Austragungsöffnung
- 125: Aussparung, Vertiefung
- 126: Kupplungshälfte
- 127: Bund
- 128: Kopfteil
- 129: Mittellängsachse
- 130: Antriebseinheit
- 431, 331, 131: Träger
- 432, 332, 215, 132: Motor
- 433, 333, 133: Mitnehmerhülse
- 134: Mitnehmer-Rollendorn
- 135: Antriebsstange
- 136: innere Rolle
- 137: äussere Rolle
- 138: Schlitz
- 139: oberer Anschlag
- 140: unterer Anschlag
- 241, 141: Kronenhülse
- 142: Rückstellfeder
- 143: Positionsring
- 214: Drehlager
- 436, 336: Schlagfläche
- 460, 360: Schlagwerk
- 461,361: Spannmechanismus
- 462, 362: Kronenrad
- 465, 365: Spiel- Einstellvorrichtung
- 466, 366: Schlaghub- Einstellvorrichtung
- 467, 367: Hebel
- 468,368: Tastrolle
- 369: Biegelager
- 390: Stellantrieb
- 463: Hammermasse
- 464: Schlagfeder
- 621: Verschlussbereich
- 622: Austragungsbereich
- 624: Austragungsfläche
- 900: Dosiergut
- S: Verzögerung
- X: Länge des Verschlussbereichs 621
- A_{V}: Querschnittflächenänderung der Austragungsöffnung
- Z_{C}: Bewegungsverlauf Zustellbewegung Träger
- Z_{K}: Kupplungspunkt
- Z_{R}: Bewegungsverlauf Antriebsstange
- Z_{T}: Bewegungsverlauf Schläge des Schlagwerks
- Z_{V}: Bewegungsverlauf Verschlusselement

## Patentansprüche

1. Dosiervorrichtung (100, 200, 300, 400) mit einer Dosiereinheit und mit mindestens einer Aufnahmevorrichtung (110) für die Dosiereinheit (120) und mit mindestens einer Antriebseinheit (130), welche Antriebseinheit (130) eine Antriebsstange (135) beinhaltet und welche Dosiereinheit (120) mindestens eine Austragungsöffnung (124) und mindestens ein, in der Austragungsöffnung (124) angeordnetes und im Betriebszustand der Dosiervorrichtung (100, 200, 300, 400) mit der Antriebsstange (135) koppelbares Verschlusselement (122) aufweist, wobei durch eine lineare Verschiebbarkeit des Verschlusselementes (122) in der Austragungsöffnung (124) entlang seiner Mittellängsachse (129) und durch die Formgebung des Verschlusselements (122) der Austrittsquerschnitt der Austragungsöffnung (124) zwischen einer Geschlossenstellung und einer maximalen Offenstellung variierbar ist, wobei die Antriebseinheit (130) der Kopplung beziehungsweise der Öffnung der Austragungsöffnung (124) dienend in einer linearen Zustellbewegung zur Dosiereinheit (120) hin verschiebbar ist und das Verschlusselement (122) der Dosiereinheit (120) mittels einer Verschlussfeder (121) bis zum Abschluss eines Kopplungsvorganges des Verschlusselements (122) mit der Antriebsstange (135) in der Geschlossenstellung gehalten ist **dadurch gekennzeichnet, dass** zur Verhinderung eines vorzeitigen Öffnens der Austragungsöffnung (124) beim Kopplungsvorgang die Antriebsstange (135) relativ zur Antriebseinheit (130) gegen die Zustellbewegung begrenzt linear verschiebbar ist.

2. Dosiervorrichtung (100, 200, 300, 400) nach Anspruch 1, **dadurch gekennzeichnet, dass** das Verschlusselement (122) und die Antriebsstange (135) drehantreibbar ausgebildet sind.

3. Dosiervorrichtung (300, 400) nach Anspruch 1 oder 2, **dadurch gekennzeichnet, dass** die Dosiervorrichtung (300, 400) ein Schlagwerk (360, 460) aufweist, dessen Schläge, unabhängig von der momentanen Lage des Verschlusselements (122) in Bezug zur Austragungsöffnung (124) und unabhängig von einer Öffnungs- oder Schliessbewegung des Verschlusselementes (122), auf das Verschlusselement (122) übertragbar sind.

4. Dosiervorrichtung (300, 400) nach Anspruch 3, **dadurch gekennzeichnet, dass** die Schläge des Schlagwerks (360, 460) über die Antriebsstange (135) auf das Verschlusselement (122) übertragbar sind.

5. Dosiervorrichtung (300, 400) nach Anspruch 3 oder 4, **dadurch gekennzeichnet, dass** das Schlagwerk (360, 460) einen Spannmechanismus (361, 461) und einen Hebel (367, 467) aufweist.

6. Dosiervorrichtung (300, 400) nach Anspruch 5, **dadurch gekennzeichnet, dass** die Antriebsstange (135) eine Schlagfläche (336, 436) aufweist und der Hebel (367, 467) mindestens eine, der Einstellung des Schlagspiels zwischen dem Hebel (367, 467) und der Schlagfläche dienende Spiel- Einstellvorrichtung (365, 465), insbesondere eine Spieljustierschraube aufweist.

7. Dosiervorrichtung (300, 400) nach einem der Ansprüche 3 bis 6, **dadurch gekennzeichnet, dass** das Schlagwerk (360, 460) eine Schlaghub-Einstellvorrichtung (366, 466), insbesondere einen einstellbaren Endanschlag für den Hebel (367, 467) aufweist.

8. Dosiervorrichtung (300, 400) nach Anspruch 7, **dadurch gekennzeichnet, dass** die Schlaghub-Einstellvorrichtung (366, 466) und/ oder die Spiel-Einstellvorrichtung (365, 465) einen Stellantrieb (390) aufweisen.

9. Dosiervorrichtung (300, 400) nach einem der Ansprüche 3 bis 8, **dadurch gekennzeichnet, dass** am Hebel (367, 467) eine Hammermasse (463) angeordnet ist.

10. Dosiervorrichtung (100, 200) nach Anspruch 3 oder 4, **dadurch gekennzeichnet, dass** das Schlagwerk ein mit der Antriebsstange (135) verbundenes Schlagübertragungsglied und eine an der Aufnahmevorrichtung (110) abgestützte Kronenhülse (141, 241) aufweist, wobei durch das Abfahren von an der Kronenhülse (141, 241) ausgebildeten Zacken mittels dem Schlagübertragungsglied Schläge erzeugbar und an die Antriebsstange (135) übertragbar sind.

11. Dosiervorrichtung (200) nach Anspruch 10, **dadurch gekennzeichnet, dass** die Kronenhülse (241) drehantreibbar an der Aufnahmevorrichtung (110) abgestützt ist.

12. Dosiervorrichtung (100, 200, 300, 400) nach einem der Ansprüche 1 bis 11, **dadurch gekennzeichnet, dass** ein der Überwachung des Kupplungsvorganges dienender Sensor (113) vorhanden ist.

13. Dosiervorrichtung (100, 200, 300, 400) nach einem der Ansprüche 1 bis 12, **dadurch gekennzeichnet, dass** das Verschlusselement (122) der Dosiereinheit (120) in seiner Grundform zylinderförmig ausgebildet ist, mindestens ein dem Verschliessen der Austragungsöffnung (124) dienender Verschlussbereich (621) und ein diesem benachbart angeordneter, der Austragung von Dosiergut (900) dienender Austragungsbereich (624) aufweist, wobei der Austragungsbereich (624) mit mindestens einer vom Zylindermantel ausgehenden Vertiefung (125) versehen ist.

14. Dosiervorrichtung (100, 200, 300, 400) nach einem der Ansprüche 1 bis 13, **dadurch gekennzeichnet, dass** das in der Dosiereinheit (120) enthaltene Dosiergut (900) ein Pulver, eine Paste oder eine Flüssigkeit ist.

15. Dosiervorrichtung (100, 200, 300, 400) nach einem der Ansprüche 1 bis 14, **dadurch gekennzeichnet, dass** die Verschlussfeder (121) beziehungsweise deren Federkraft auf die Eigenschaften des in der Dosiereinheit (120) enthaltenen Dosierguts (900) abgestimmt ist.

16. Dosiervorrichtung (100, 200, 300, 400) nach einem der Ansprüche 1 bis 15, **dadurch gekennzeichnet, dass** die Antriebsstange (135) einen Kupplungsbereich mit einem Sechsrund- Profil und das Verschlusselement (122) einen Kupplungsbereich mit einem zum Sechsrund- Profil passenden Innensechsrund-Profil aufweist.

17. Verfahren zur Bereitschaftserstellung einer Dosiervorrichtung (100, 200, 300, 400) nach einem der Ansprüche 1 bis 16, **dadurch gekennzeichnet, dass:**
a. In einem ersten Schritt die Antriebseinheit (130) in Beschickungsposition gebracht wird,
b. In einem zweiten Schritt die Dosiereinheit (120) in die Aufnahmevorrichtung (110) eingesetzt wird,
c. In einem dritten Schritt die Antriebseinheit (130) unter langsam drehender Antriebsstange (135) linear in Richtung zur Dosiereinheit (120) hin zugestellt wird bis der Kupplungsbereich der Antriebsstange (135) in den Kupplungsbereich des Verschlusselementes (122) eingreift und ein Sensor (113) den Abschluss des Kupplungsvorganges feststellt und damit die Betriebsbereitschaft der Dosiervorrichtung (100, 200, 300, 400) an eine Steuer- und Regeleinheit der Dosiervorrichtung (100, 200, 300, 400) meldet.

## Claims

1. Dosage-dispensing device (100, 200, 300, 400) comprising a dosage-dispensing unit (120), at least one receiving device (110) for the dosage-dispensing unit (120) and at least one drive unit (130), wherein the drive unit (130) comprises a drive shaft (135) and the dosage-dispensing unit (120) comprises at least one delivery orifice (124) and at least one closure element (122) which is arranged in the delivery orifice (124) and, in the operating state of the dosage-dispensing device (100, 200, 300, 400), is capable of being coupled to the drive shaft (135), and wherein due to a capability of linear movement of the closure element (122) along its central longitudinal axis (129) in the delivery orifice (124) and due to the shape given to the closure element (122), the aperture cross-section of the delivery orifice (124) is variable between a closed position and a maximally open position, wherein the drive unit (130) which serves to effect said coupling and to effect the opening of the delivery orifice (124) is capable of being advanced in a linear movement towards the dosage-dispensing unit (120) and that the closure element (122) of the dosage-dispensing unit (120) is held in the closed position by means of a closure spring (121) up to the point where a clutch-engaging process between the closure element (122) and the drive shaft (135) is completed, **characterized in that** in order to prevent a premature opening of the delivery orifice (124) during said clutch-engaging process, the drive shaft (135) is capable of limited linear movement relative to the drive unit (130) in the opposite direction of said advancing movement of the drive unit.

2. Dosage-dispensing device (100, 200, 300, 400) according to claim 1, **characterized in that** the closure element (122) and the drive shaft (135) are designed with the capability to be driven in rotary movement.

3. Dosage-dispensing device (300, 400) according to claim 1 or 2, **characterized in that** the dosage-dispensing device (300, 400) comprises an impact mechanism (360, 460) whose impacts can be transferred to the closure element (122) independently of the momentary position of the closure element (122) in relation to the delivery orifice (124) and independently of an opening- or closing movement of the closure element (122).

4. Dosage-dispensing device (300, 400) according to claim 3, **characterized in that** the impacts produced by the impact mechanism (360, 460) can be transferred through the drive shaft (135) to the closure element (122).

5. Dosage-dispensing device (300, 400) according to claim 3 or 4, **characterized in that** the impact mechanism (360, 460) comprises a tensioning mechanism (361, 461) and a lever (367, 467).

6. Dosage-dispensing device (300, 400) according to claim 5, **characterized in that** the drive shaft (135) has an impact surface area (336, 436) and that the lever (367, 467) has at least one play-adjusting device (365, 465), in particular a play adjustment screw, serving for the adjustment of the impact play between the lever (367, 467) and the impact surface area.

7. Dosage-dispensing device (300, 400) according to one of the claims 3 to 6, **characterized in that** the impact mechanism (360, 460) comprises an impact amplitude adjusting device (366, 466), in particular an adjustable end stop for the lever (367, 467).

8. Dosage-dispensing device (300, 400) according to claim 7, **characterized in that** the impact amplitude adjusting device (366, 466) and/or the play-adjusting device (365, 465) comprises an adjustment-actuating drive (390).

9. Dosage-dispensing device (300, 400) according to one of the claims 3 to 8, **characterized in that** a hammer mass (463) is arranged on the lever (367, 467).

10. Dosage-dispensing device (100, 200) according to one of the claims 3 or 4, **characterized in that** the impact mechanism comprises an impact transfer member connected to the drive shaft (135) and further comprises a crown sleeve (141, 241) supported by the receiving device (110), wherein impacts can be generated and transmitted to the drive shaft (135) by means of the impact transfer member through the tracking of the contours of serrations formed on the crown sleeve (141, 241).

11. Dosage-dispensing device (200) according to claim 10, **characterized in that** the crown sleeve (241) is supported on the receiving device (110) in such a way as to be capable of being driven in rotary movement.

12. Dosage-dispensing device (100, 200, 300, 400) according to one of the claims 1 to 11, **characterized in that** there is a sensor (113) serving to monitor the clutch engagement process.

13. Dosage-dispensing device (100, 200, 300, 400) according to one of the claims 1 to 12, **characterized in that** the closure element (122) of the dosage-dispensing unit (120) is designed with a principally cylindrical shape, that it comprises a closure portion (621) serving to close off the delivery orifice (124), and further comprises a delivery portion (624) arranged adjacent to the closure portion (621) and serving to deliver dosage-material (900), wherein the delivery portion (624) is provided with at least one depression (125) which is recessed from the circumference of the cylinder.

14. Dosage-dispensing device (100, 200, 300, 400) according to one of the claims 1 to 13, **characterized in that** the dosage material (900) contained in the dosage-dispensing unit (120) is a powder, a paste or a liquid.

15. Dosage-dispensing device (100, 200, 300, 400) according to one of the claims 1 to 14, **characterized in that** the closure spring (121), more specifically the spring force of the closure spring, is matched to the properties of the dosage material (900) contained in the dosage-dispensing unit (120).

16. Dosage-dispensing device (100, 200, 300, 400) according to one of the claims 1 to 15, **characterized in that** the drive shaft (135) has a coupling portion with a six-lobe profile and the closure element (122) has a coupling portion with an internal six-lobe profile matched to said six-lobe profile.

17. Method of putting a dosage-dispensing device (100, 200, 300, 300) according to one of the claims 1 to 16 into a state where said dosage-dispensing device is ready to dispense a substance, **characterized in that:**
a. in a first step, the drive unit (130) is brought into the position for inserting a dosage-dispensing unit,
b. in a second step, the dosage-dispensing unit (120) is set into the receiving device (110),
c. in a third step, the drive unit (130) is moved along a linear displacement path in the direction towards the dosage-dispensing unit (120) with the drive shaft (135) rotating slowly, until the clutch portion of the drive shaft (135) engages the clutch portion of the closure element (122) and a sensor (113) detects the completion of the clutch engagement and sends a signal to a control- and regulating unit of the dosage-dispensing device (100, 200, 300, 400) indicating that the dosage-dispensing device (100, 200, 300, 400) is ready for operation.

## Revendications

1. Dispositif de dosage (100, 200, 300, 400) avec une ensemble de dosage et avec au moins un dispositif d'accueil (110) pour l'ensemble de dosage (120), et avec au moins une ensemble d'entraînement (130), laquelle ensemble d'entraînement (130) comprenant une barre d'entraînement (135) et laquelle ensemble de dosage (120) comprenant au moins une ouverture de dosage (124) et au moins élément de fermeture (122), disposé dans l'ouverture de dosage (124) et susceptible d'être accouplé avec la barre d'entraînement (135), à l'état de fonctionnement du dispositif de dosage (100, 200, 300, 400), dans lequel un déplacement linéaire de l'élément de fermeture (122) dans l'ouverture de dosage (124), le long de son axe longitudinal médian (129), ainsi que la forme de l'élément de fermeture (122), permettent de faire passer la section transversale de sortie de l'ouverture de dosage (124) d'une position fermée à une position ouverte au maximum, dans lequel l'ensemble d'entraînement (130) de l'accouplement ou de l'ouverture servant d'ouverture de dosage (124) peut être déplacée vers l'ensemble de dosage (120) dans un mouvement linéaire, et l'élément de fermeture (122) de l'ensemble de dosage (120) est maintenu dans la position de fermeture au moyen d'un ressort de fermeture (121), jusqu'à la fin d'un procédé d'accouplement entre l'élément de fermeture (122) et la barre d'entraînement (135), **caractérisé en ce que** pour empêcher une ouverture prématurée de l'ouverture de dosage (124) lors du procédé d'accouplement, la barre d'entraînement (135) peut être déplacée linéairement par rapport à l'ensemble d'entraînement (130), de façon limitée contre le mouvement de décaler.

2. Dispositif de dosage (100, 200, 300, 400) selon la revendication 1, **caractérisé en ce que** l'élément de fermeture (122) et la barre d'entraînement (135) sont conçus de manière à pouvoir être entraînés par rotation.

3. Dispositif de dosage (300, 400) selon l'une des revendications 1 ou 2, **caractérisé en ce que** le dispositif de dosage (300, 400) comporte un percuteur (360, 460), dont les coups peuvent être transmis à l'élément de fermeture (122), indépendamment de la position temporaire de l'élément de fermeture (122) par rapport à l'ouverture de dosage (124) et indépendamment d'un mouvement d'ouverture ou de fermeture de l'élément de fermeture (122).

4. Dispositif de dosage (300, 400) selon la revendication 3, **caractérisé en ce que** les coups du percuteur (360, 460) peuvent être transmis à l'élément de fermeture (122) par le biais de la barre d'entraînement (135).

5. Dispositif de dosage (300, 400) selon l'une des revendications 3 ou 4, **caractérisé en ce que** le percuteur (360, 460) comporte un mécanisme de serrage (361, 461) et un levier (367, 467).

6. Dispositif de dosage (300, 400) selon la revendication 5, **caractérisé en ce que** la barre d'entraînement (135) comporte une surface de butée (336, 436) et le levier (367, 467) comporte au moins une dispositif de réglage de jeu (365, 465), plus particulièrement une vis d'ajustement de jeu, servant au réglage du jeu de coups entre le levier (367, 467) et la surface de butée.

7. Dispositif de dosage (300, 400) selon l'une des revendications 3 à 6, **caractérisé en ce que** le percuteur (360, 460) comporte un dispositif de réglage de course de coup (366, 466), plus particulièrement une butée finale réglable pour le levier (367, 467).

8. Dispositif de dosage (300, 400) selon la revendication 7, **caractérisé en ce que** le dispositif de réglage de course de coup (366, 466) et/ou le dispositif de réglage de jeu (365, 465) comportent un actionneur (390).

9. Dispositif de dosage (300, 400) selon l'une des revendications 3 à 8, **caractérisé en ce qu'**une masse de marteau (463) est montée sur le levier (367, 467).

10. Dispositif de dosage (100, 200) selon l'une des revendications 3 ou 4, **caractérisé en ce que** le percuteur comporte un élément de transmission de coups relié à la barre d'entraînement (135) et une douille à couronne (141, 241) appuyée sur le dispositif d'accueil (110), dans lequel des coups peuvent être produits par le déplacement sur des crans formés sur la douille à couronne (141, 241), au moyen de l'élément de transmission de coups, et transmis à la barre d'entraînement (135).

11. Dispositif de dosage (200) selon la revendication 10, **caractérisé en ce que** la douille à couronne (241) s'appuie sur le dispositif d'accueil (110) de façon à pouvoir être entraînée par rotation.

12. Dispositif de dosage (100, 200, 300, 400) selon l'une des revendications 1 à 11, **caractérisé en ce qu'**il est prévu un capteur (113) servant à surveiller le procédé d'accouplement.

13. Dispositif de dosage (100, 200, 300, 400) selon l'une des revendications 1 à 12, **caractérisé en ce que** l'élément de fermeture (122) de l'ensemble de dosage (120) est, dans sa forme de base, conçu comme un cylindre, comportant au moins une région de fermeture (621) servant à la fermeture de l'ouverture de dosage (124) et une région de distribution (624) limitrophe à la première, servant à la distribution du produit à doser (900), la région de distribution (624) étant pourvue d'au moins un renfoncement (125) partant de l'enveloppe extérieure du cylindre.

14. Dispositif de dosage (100, 200, 300, 400) selon l'une des revendications 1 à 13, **caractérisé en ce que** le produit à doser (900) contenu dans l'ensemble de dosage (120) est une poudre, une pâte ou un liquide.

15. Dispositif de dosage (100, 200, 300, 400) selon l'une des revendications 1 à 14, **caractérisé en ce que** le ressort de fermeture (121) ou sa force de ressort est adapté(e) aux propriétés du produits à doser (900) contenu dans l'ensemble de dosage (120).

16. Dispositif de dosage (100, 200, 300, 400) selon l'une des revendications 1 à 15, **caractérisé en ce que** la barre d'entraînement (135) comporte une région d'accouplement avec un profil à six arrondis et l'élément de fermeture (122) comporte une région d'accouplement avec un profil intérieur à six arrondis correspondant au premier profil à six arrondis.

17. Procédé pour le fonctionnement d'un dispositif de dosage (100, 200, 300, 400) selon l'une des revendications 1 à 16, **caractérisé en ce que :**
a. dans une première étape, l'ensemble d'entraînement (130) est mise en position d'alimentation,
b. dans une deuxième étape, l'ensemble de dosage (120) est placée dans le dispositif d'accueil (110),
c. dans une troisième étape, l'ensemble d'entraînement (130) est déplacée linéairement vers l'ensemble de dosage (120), tandis que la barre d'entraînement (135) tourne lentement, jusqu'à ce que la région d'accouplement de la barre d'entraînement (135) s'engage dans la région d'accouplement de l'élément de fermeture (122) et qu'un capteur (113) constate la fin du procédé d'accouplement et communique ainsi la disponibilité du dispositif de dosage (100, 200, 300, 400) à une ensemble de réglage et de commande du dispositif de dosage (100, 200, 300, 400).
